# EUROPÄISCHE PATENTSCHRIFT

(11) **EP 1 548 237 B1**
(45) Veröffentlichungstag und Bekanntmachung des Hinweises auf die Patenterteilung: **08.11.2006**
(21) Anmeldenummer: 05101306.8
(22) Anmeldetag: 25.06.2002
(51) Int. Cl.: F01D 25/12, F01D 5/18

(54) **Gasturbinenteil mit Kühlluftbohrung**
Gas turbine component with cooling bore
Composant d'une turbine à gaz avec un perçage de refroidissement

(30) Priorität: 13.07.2001 CH 12912001
(43) Veröffentlichungstag der Anmeldung: 29.06.2005
(62) Teilanmeldung aus: 02405528.7
(73) Patentinhaber: Alstom Technology Ltd, 5400 Baden (CH)
(72) Erfinder: Fried, Reinhard, 5415 Nussbaumen (CH); Rathmann, Ulrich, 5400 Baden (CH)

(56) Entgegenhaltungen:
- EP-A- 1 059 418
- US-A- 4 192 138

## Beschreibung

### Technisches Gebiet

Bei der Erfindung handelt es sich um ein Gasturbinenteil mit einer oder mehreren Kühlluftbohrungen.

### Stand der Technik

Die Dokumente US-A-5,192,192 US-A-4,075,455, US-A-5,779,437, US-A-4,606,701 oder US-A-5,183,385 zeigen allgemein luftgekühlte Turbinenschaufeln, in welchen Kühlluft durch an verschiedenen Stellen angeordnete Kühlluftbohrungen strömt. Die Form der Kühlluftbohrung ist entsprechend ihrer Lage und ihrer Funktion ausgestaltet. In diesen Beispielen handelt es sich um Filmkühlungslöcher, welche einen Film auf einer Oberfläche eines Bauteils bilden und so das zugrunde liegende Bauteil kühlen.

Weiter sind aus den Schriften DE-OS-2 042 947, EP-A1-0 534 207, W099/36675, US-A-6,120,249 oder US-A-4,040,767 verschiedene Schaufelanordnungen mit Kühlvorrichtungen bekannt geworden. In Gegensatz zu den o.g. Schriften handelt es sich dabei aber um eine Prallkühlung. Kühlluft strömt durch Kühlluftbohrungen eines Prallblechs auf eine sich in einem Abstand darunter befindende Plattform der Turbinenschaufel.

Ein Problem bei dem Kühlsystem von derartigen Turbinenschaufeln besteht darin, dass die Kühlluft Schmutz- oder Staubpartikel enthält. Während kleinere Partikel ungehindert durch die Kühlluftbohrungen, welche beispielsweise einen Durchmesser von 0.5 bis 1 mm haben können, ohne weitere Probleme strömen können, verschliessen grössere Partikel die Kühlluftbohrungen, so dass die Kühlleistung insgesamt herabgesetzt wird und eine Überhitzung des Bauteils droht.

Die Schrift EP-A1-1 072 757 schlägt daher einen staubresistentes, internes Kühlsystem einer Turbinenschaufel vor.

Die Schriften US-A-3,066,912, US-A-5,983,623, GB-A-2,342,142, DE-A1-44 22 965, DE-A1-35 32 168, DE-AS-25 14 704 oder US-A-4,173,458 lösen das oben genannte Problem durch Zyklone. Die verunreinigte Luft wird durch den Zyklon geleitet, die Asche abgeschieden, und die gereinigte Luft danach angeeigneter Stelle weiter verwendet.

Die vorgeschlagenen Massnahmen zur Trennung von Kühlluft und Staub sind jedoch recht aufwendig.

### Darstellung der Erfindung

Die Erfindung löst die Aufgabe, ein Gasturbinenteil mit Kühlluftbohrungen zu schaffen, welche durch Partikel, welche sich in der Kühlluft befinden, nicht mehr ganz verschlossen werden. Insbesondere soll es sich bei dem Gasturbinenteil um ein Prallblech einer Plattform einer Turbinenschaufel handeln.

Erfindungsgemäss wird dies bei einem Gasturbinenteil mit einer Kühlluftbohrung gemäss dem Oberbegriff des Anspruchs 1, dadurch erreicht, dass an der Kühlluftbohrung ein Bügel angeordnet ist, der sich über das Kühlloch wölbt und der verhindert, dass die Partikel zur Öffnung der Kühlluftbohrung gelangen und diese verschliessen.

Vorteilhaft bleiben die Partikel, welche die Kühlluft verunreinigen könnten, zwar über der Kühlluftbohrung liegen, die Partikel verschliessen dieses aber nicht mehr, so dass immer eine gewisse Kühlleistung durch Kühlluft, welche an den Partikeln vorbei durch die Kühlluftbohrung strömt, erhalten bleibt. Darüber hinaus besteht eine grössere Wahrscheinlichkeit, dass die Partikel durch Vibrationen oder Strömungsschwankungen in der Kühlluft aus dieser Lage wieder wegbewegt werden.

In einer beispielhaften Ausführungsform kann es sich bei dem Gasturbinenteil um ein Teil einer Gasturbine handeln, so um ein Blechteil, also zum Beispiel eine Prallplatte einer Plattform einer Laufschaufel, oder um allgemein ein zu kühlendes Gussteil.

### Kurze Beschreibung der Figuren

Die Erfindung ist anhand der beigefügten Figur näher erläutert,

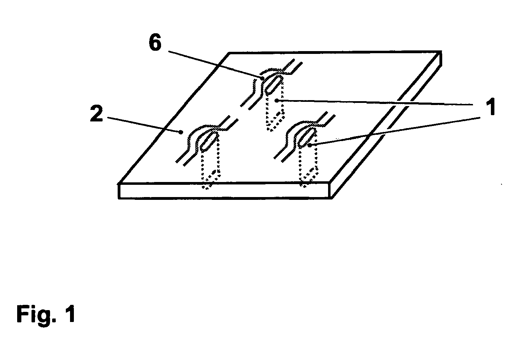

- Fig. 1: ein Gasturbinenteil mit erfindungsgemässen Kühlluftbohrungen mit darüber angeordnetem Bügel zeigt.

Es sind nur die für die Erfindung wesentlichen Merkmale dargestellt.

### Weg zur Ausführung der Erfindung

Figur 1 zeigt einen Ausschnitt eines Gasturbinenteils 2 mit mehreren Kühlluftbohrungen 1 mit je einer Öffnung an der Oberfläche. Erfindungsgemäss ist über jeder Kühlluftbohrung ein Bügel 6 in der Form einer Erhebung oder eines "Daches" über der Kühlluftbohrung 1 angeordnet, der sich über die Öffnung wölbt und dadurch verhindert, dass Partikel die Kühlluftbohrungen 1 verdecken.

## Patentansprüche

1. Gasturbinenteil (2) mit einer Kühlluftbohrung (1), durch welche mit Partikeln beladene Kühlluft während des Betriebs der Kühlluftbohrung (1) strömt,
**dadurch gekennzeichnet, dass**
an der Kühlluftbohrung (1) ein Bügel angeordnet ist, der sich über die Kühlluftbohrung wölbt und verhindert, dass die Partikel die Kühlluftbohrung (1) verschliessen.

2. Gasturbinenteil (2) nach Anspruch 1,
**dadurch gekennzeichnet, dass**
es sich bei dem Gasturbinenteil um ein Guss- oder um ein Blechteil handelt.

## Claims

1. Gas turbine part (2) with a cooling air hole (1), through which cooling air laded with particles flows during the operation of the cooling air hole (1), **characterized in that** there is arranged at the cooling air hole (1) a stirrup which arches over the cooling air hole and prevents the particles from closing the cooling air hole (1).

2. Gas turbine part (2) according to Claim 1, **characterized in that** the of the gas turbine part is a cast part or a sheet-metal part.

## Revendications

1. Composant d'une turbine à gaz (2) comprenant un perçage d'air de refroidissement (1), à travers lequel s'écoule de l'air de refroidissement chargé de particules pendant le fonctionnement du perçage d'air de refroidissement (1),
**caractérisé en ce que**
l'on dispose sur le perçage d'air de refroidissement (1) un étrier qui se recourbe sur le perçage d'air de refroidissement et qui empêche que les particules n'obstruent le perçage d'air de refroidissement (1).

2. Composant d'une turbine à gaz (2) selon la revendication 1,
**caractérisé en ce que**
le composant de turbine à gaz est une pièce coulée ou une pièce en tôle.
